# EUROPÄISCHE PATENTSCHRIFT

(11) **EP 1 670 656 B1**
(45) Veröffentlichungstag und Bekanntmachung des Hinweises auf die Patenterteilung: **06.02.2008**
(21) Anmeldenummer: 04786806.2
(22) Anmeldetag: 17.09.2004
(51) Int. Cl.: B60J 7/16, B60J 7/20

(54) **FAHRZEUGDACHSTRUKTUR FÜR EIN CABRIO-KRAFTFAHRZEUG**
ROOF STRUCTURE FOR A MOTOR VEHICLE
STRUCTURE DE TOIT DE VEHICULE POUR UN VEHICULE AUTOMOBILE

(30) Priorität: 30.09.2003 DE 10345296
(43) Veröffentlichungstag der Anmeldung: 21.06.2006
(73) Patentinhaber: Wilhelm Karmann GmbH, 49084 Osnabrück (DE)
(72) Erfinder: BUNSMANN, Winfried, 49143 Bissendorf (DE); BROCKHOFF, Franz, Ulrich, 49565 Bramsche (DE); HESELHAUS, Udo, 49479 Ibbenbüren (DE)
(86) Internationale Anmeldenummer: PCT/DE2004/002087
(87) Internationale Veröffentlichungsnummer: WO 2005/032867

(56) Entgegenhaltungen:
- WO-A-01/85480
- DE-A1- 10 057 872
- DE-C1- 10 006 290
- DE-C1- 19 706 397
- DE-C1- 19 930 616
- FR-A- 2 854 353

## Beschreibung

Die Erfindung betrifft eine Fahrzeugdachstruktur, bei der ein bewegliches Dachteil zwischen einer Offen- und einer Schließstellung bewegbar ist. Dabei bezieht sich die Erfindung insbesondere auf eine Fahrzeugdachstruktur, bei der das bewegliche Dachteil starr ist. Die Erfindung betrifft ferner ein Kraftfahrzeug mit eingeschränkter Karosserieöffnungslinie mit einer entsprechenden Fahrzeugdachstruktur.

Aus der DE 198 51 231 A1 ist ein Personenkraftwagen mit einem im seitlichen Dachrahmen geführten und in den Heckbereich verfahrbaren, starren Dachteil und mit einem zumindest teilweise absenkbaren Heckscheibenteil, das in seiner geschlossenen Position zwischen sogenannten C-Säulenabschnitten des Dachrahmens geführt ist, bekannt. Das in sich starre Dachteil des Personenkraftwagens ist in Fahrzeuglängsrichtung verschiebbar. Bei der Anordnung wird zum Öffnen des Dachs das Heckscheibenteil zunächst in eine zumindest teilweise abgesenkte und dabei zumindest teilweise geöffnete Position gebracht. Dazu ist das Heckenscheibenteil in an den Innenseiten der C-Säulenabschnitte vorgesehenen Führungsschienen weiter in Richtung des Heckbereichs des PKWs verfahr- oder verlagerbar. In einem weiteren Schritt wird anschließend das Dachteil geöffnet. Dazu wird das Dachteil ausgehend aus seiner geschlossenen Position in Fahrzeuglängsrichtung nach hinten, d.h. in den Heckbereich des PKWs verfahren. Schließlich sind in einem folgenden Schritt Dachteilabschnitte, die in Fahrzeugvorwärtsfahrtrichtung seitlich an das Dachteil in seiner geschlossenen Stellung angrenzen, entfernbar, indem sie in den Bereich der C-Säulenabschnitte gebracht werden, so dass eine sogenannte Targaversion des PKWs gebildet wird. Bei der Bewegung des Dachteils in die offene Position wird das Dachteil im Bereich seiner Vorderkante in einer an der Oberschale des Dachrahmendachteilabschnitts vorgesehenen Führungsschiene geführt und mit seiner Hinterkante in einer Gleitbahn, die an der Innenseite des C-Säulenabschnitts angebracht ist, geführt. Zusätzlich kann das Dachteil zum Öffnen um eine quer zur Fahrzeuglängsrichtung verlaufende Drehachse geringfügig verschwenkt werden. Beim Kontakt des Dachteils mit der Führungsschiene, soweit es nicht ohnehin vollständig innerhalb der Führungsschiene während der gesamten Öffnungsbewegung läuft, wird keine Richtungsänderung der Bewegungsbahn des Dachteils hervorgerufen. Die Bewegung setzt sich vielmehr kontinuierlich fort.

Aus der DE 100 01 941 C1 ist eine Fahrzeugdachstruktur bekannt, bei der ein Falt- bzw. Schiebedach im Bereich von Seitenholmen zwischen einer A-Säule und einer B-Säule des Fahrzeugs sowie in eine Position hinter diese verschiebbar geführt ist. Die Seitenholme sind lösbar mit der A-Säule und der B-Säule verbunden und können mittels eines Mechanismus in einen Stauraum im Bereich einer Hutablage des Fahrzeugs überführt werden. Für das Überführen der Seitenholme ist eine Gestängekinematik vorgesehen, die für die Seitenholme eine Bewegungsbahn erzeugt, die sich zusammensetzt aus einer Schwenkkomponente zwischen dem in seiner Position zwischen A-Säule und B-Säule angeordneten Seitenholm und seiner Position im Stauraum etwa in einer Vertikalebene liegend und einer Drehkomponente, die der Drehverstellung des Seitenholms in seine Lage zwischen A-Säule und B-Säule um ca. 90°C in seine Querposition im Stauraum entspricht.

Die DE 100 20 663 C2 betrifft eine Dachkonstruktion für ein Kraftfahrzeug mit abhebbarem Dach. Das abhebbare Dach, das als Hartschalendach oder Hardtop ausgebildet ist, besteht aus einem ersten, vorderen Dachteil und einem zweiten hinteren Dachteil. Das vordere Dachteil ist über eine erste, als Viergelenk ausgebildete gelenkige Verbindung mit einem karosseriefesten Hauptlager verbunden. Das hintere Dachteil ist mit einem zweiten Viergelenk als gelenkige Verbindung mit einem karosseriefesten Hauptlagerteil verbunden. Zur Bewegung des Gestängemechanismus sind wahlweise ein Elektroantrieb oder ein hydraulischer Antrieb vorgesehen.

In der zum Anmeldezeitpunkt nicht veröffentlichten DE 102 54 366 ist ein Targa-Fahrzeug beschrieben, das zumindest ein öffnungsfähiges vorderes Dachteil aufweist. Auch mehrere bewegliche Dachteile sind möglich. Außenbereiche des Dachteils können um eine Achse parallel zur Fahrzeuglängsachse auf das mittlere Dachteil eingeschwenkt werden, so dass die Breite des bewegbaren Dachteils verkleinert wird. Das bewegbare Dachteil ist mittels eines Gestänges gegenüber der Karosserie beweglich gehalten. Die Lenker des Gestänges sind in Schlitzausnehmungen, die parallel zu den Finnen des Finnendachs liegen, und sich im wesentlichen über deren gesamte Länge erstrecken, geführt. Das durch z.B. ein elektrisches oder hydraulisches Antriebsorgan bewegte Gestänge ist einenends karosseriefest gelagert und greift mit dem freien Ende an einem Lenker an. Der ebenfalls karosseriefest einenends gelagerte Lenker wirkt über Zwischenhebel auf den anderen Lenker ein, so dass ein Mehrgelenk gebildet wird, mit dem zunächst eine im wesentlichen geradlinige Verlagerung des Dachteils zu seiner Öffnung möglich wird.

Aus der zum Anmeldezeitpunkt ebenfalls nicht veröffentlichten DE 102 54 365 ist ein Targa-Fahrzeug bekannt, bei der außenliegende Bereiche eines Dachteils bezüglich eines mittleren Bereichs derart verlagert werden können, dass das bewegliche Dachteil zwischen einer verschmälerten und einer normalen Breite variierbar ist und in verschmälerter Breite zwischen seiner Offen- und seiner Schließstellung beweglich ist. Die Schwenkverlagerung der seitlichen Dachteile wird durch Mehrgelenke bewirkt, mit Hilfe derer die Außenbereiche nicht nur einschwenken, sondern gleichzeitig angehoben werden. Der mittlere Bereich des Dachteils weist ein eigenständiges Gestänge auf, an dem er gegenüber der Karosserie beweglich gehalten ist. Lenker sind in Schlitzausnehmungen, die parallel zu den Finnen liegen und sich im wesentlichen über deren gesamte Länge erstrecken, geführt. Zum Positionieren des Dachteils im Heckbereich schwenkt ein hinteres Dachteil um eine im wesentlichen senkrecht zur Vorwärtsfahrtrichtung verlaufende Achse auf.

Aus der DE 100 57 872 A1 ist ein Hardtop-Fahrzeugdach bekannt, das zwischen einer dem Fahrzeuginnenraum überbrückenden Schließstellung und einer Ablageposition verstellbar ist. Das Dach weist ein vorderes Dachteil und ein hinteres Dachteil auf, wobei zwischen den Dachteilen eine Relativkinematik zur Durchführung einer Relativbewegung des vorderen Dachteils angeordnet ist. Die Relativkinematik umfasst ein Viergelenk mit zwei Lenkern und einem die beiden Lenker verbindenden Schubglied, welches an einer am hinteren Dachteil angeordneten Führungsschiene verschiebbar gehalten hat. Am Dachteil kann eine zweite Führungsschiene vorgesehen sein, in der ein Lenker des Viergelenks geführt ist.

Aus der DE 197 06 397 C1, die den Oberbegriff von Anspruch 1 bildet, ist ein Hardtop für ein Cabriolet bekannt. Das Hardtop weist ein Vorderdachteil und ein mit einem Heckfenster versehenes Heckdachteil auf. Ferner ist ein Verdeckkasten vorgesehen. Die beiden Dachteile sind durch seitliche Faltgestänge von einer geschlossenen in eine offene Position und umgekehrt verschwenkbar. Das Heckdachteil weist eine am Faltgestänge angeordnete Linearführung auf und ist mit einer Linearantriebseinrichtung derart verfahrbar und mittels eines Drehhebels, der mit einem Ende über eine Gelenkstelle an dem Heckdachteil angreift und der mit seinem anderen Ende an einem fahrzeugfesten Gelenkpunkt angelenkt ist, verschwenkbar, dass die beiden Dachteile nach Wahl entweder wenigstens teilweise im Fondsitzbereich oder wenigstens annähernd vollständig im Kofferraumbereich ablegbar sind.

Davon ausgehend ist es Aufgabe der Erfindung, eine Dachstruktur der eingangs genannten Art zu schaffen, bei der das Öffnen des beweglichen Dachteils und das Einbringen in dessen Aufbewahrungsposition zuverlässig und stabil erfolgt.

Diese Aufgabe wird mit einer Fahrzeugstruktur mit den Merkmalen des Anspruchs 1 gelöst. Vorteilhafte Ausführungsformen sind durch die übrigen Ansprüche gekennzeichnet.

Der Erfindung liegt der Gedanke zugrunde, eine Fahrzeugdachstruktur, bei der das Dachteil durch einen Gestängemechanismus zwischen der Offen- und der Schließstellung bewegbar ist, durch das Vorsehen einer zusätzlichen Führungseinrichtung derart zu stabilisieren, dass die Bewegung zwischen der Offen- und der Schließstellung exakt definiert erfolgt und nach Bedarf mehrmals umgelenkt werden kann, um eine gekrümmte, kurvige Bewegungsbahn zu erzielen. Dabei ist die Führungseinrichtung derart vorgesehen, dass das Dachteil bzw. der daran angebrachte Gestängemechanismus nicht über die gesamte Bewegungsbahn zwischen der Offen- und der Schließstellung mit der Führungseinrichtung in Berührung ist, sondern vielmehr der Kontakt mit der Führungseinrichtung bewirkt, dass eine Richtungsänderung der Bewegungsbahn erzwungen wird, beispielsweise eine Richtungsänderung gegen eine Vorspannkraft eines Vorspannmechanismus des Gestängemechanismus. Durch das Vorsehen einer getrennten Führungseinrichtung, die nur während einer Teilstrecke der Führungsbahn mit dem Dachteil in Kontakt gelangt, kann einerseits eine definierte Richtungsänderung der Bewegungsbahn des Dachteils erreicht werden. Andererseits kann sich das Dachteil während des geführten Teils der Bewegungsbahn zusätzlich an der Führungseinrichtung abstützen, so dass der Gestängemechanismus und das Dachteil während der Bewegung von der Offen- in die Schließstellung bzw. von der Schließstellung in die Offenstellung weniger anfällig gegenüber einwirkenden Kräften, beispielsweise Seitenkräften sind. Dadurch wird eine einwandfreie Funktionsweise des Dachteils bei seiner Bewegung zwischen der Offen- und der Schließstellung und dem Einbringen in die Aufbewahrungsposition bei geöffnetem Dach erreicht. Insbesondere dadurch, dass der hintere Fahrzeugraum oftmals nur eine eingeschränkte Karosserieöffnungslinie aufweist, d.h. Abweichungen von der Bewegungsbahn beim Öffnen bzw. Schließen des Dachteils wegen des eingeschränkten zur Verfügung stehenden Platzes nicht tolerierbar sind, ist eine genaue Führungsbewegung vorteilhaft, um das vorzugsweise starre Dach in den hinteren Fahrzeugraum durch die eingeschränkte Öffnung der Karosserie einzubringen. Anderenfalls würde möglicherweise ein Verklemmen bzw. eine Beschädigung des Fahrzeugs auftreten. Somit ist die Fahrzeugdachstruktur insbesondere für ein Fahrzeug mit eingeschränkter Karosserieöffnungslinie geeignet. Die erfindungsgemäße Anordnung bietet vor allem den Vorteil, dass Richtungsänderungen der Bewegungsbahn des Dachteils möglich sind, ohne dass die Exaktheit der Führung beeinträchtigt wird. Dadurch kann das bewegliche Dachteil auch in einen verhältnismäßig engen und ungünstig zugänglichen Raum im Heckteil des Fahrzeugs eingebracht werden und durch eingeschränkte Platzverhältnisse geführt werden.

Durch das Ausbilden der Führungseinrichtung mit einem am Verdeckkastendeckel oder der Fahrzeugkarosserie gelagerten Führungselement, das mit einer am Dachteil vorgesehenen Führungsbahn in Eingriff gelangt, wobei die Führungseinrichtung vorzugsweise Rollen umfasst, ist es möglich, den Kontakt zwischen Dachteil und Führungseinrichtung ohne zusätzliche wesentliche Reibungskräfte zu erreichen, so dass gegenüber einer Anordnung, die auf eine Führungseinrichtung verzichtet, kaum erhöhte Antriebsleistung zum Öffnen und Schließen des Fahrzeugdachs erforderlich ist.

Durch die Merkmale von Anspruch 5 lässt sich ferner die Führungsbahn, die am Dachteil angebracht ist, mit der die Führungseinrichtung in der Gestalt von einer oder mehreren Rollen in Eingriff kommt, optisch ansprechend ausgestalten.

Nach den bevorzugten Merkmalen gemäß Anspruch 3, 4, 6 und 7 können besonders definierte Führungsbahnen insbesondere im Hinblick auf die Bewegungsbahnen des Dachteils und mehrere dort anzubringende Richtungsänderungen erreicht werden.

Insgesamt ist es dabei möglich, einen Antrieb zum Öffnen und Schließen des Dachteils vorzusehen, der hydraulisch oder elektrisch oder auf anderweitig günstige Art gesteuert wird und beispielsweise vom Armaturenbrett aus bedienbar ist. Der Antrieb ist vorzugsweise in einzelne Antriebe für jeweils einen bestimmten Abschnitt der Bewegungsbahn geteilt, die jeweils als Einzelantriebe getrennt ansteuerbar und betreibbar sind.

Der Verdeckkastendeckel ist um eine im Wesentlichen horizontal verlaufende, heckseitige Achse aufschwenkbar und gibt in seiner Offenstellung einen Weg frei, durch den das Dachteil in den Raum unter dem Verdeckkastendeckel eingeführt werden kann. Gleichzeitig definiert er durch seine Kontur die Öffnungslinie der Karosserie, durch die das Dachteil in den Aufnahmeraum unter dem Verdeckkastendeckel gelangt.

Nachfolgend wird die Erfindung beispielhaft anhand der beigefügten Figuren in einer bevorzugten Ausführungsform beschrieben, wobei:
Fig. 1 eine schematische Darstellung der erfindungsgemäßen Fahrzeugdachstruktur in der Draufsicht ist, wobei das starre Dachteil in der geschlossenen Position ist;
Fig. 2 eine Seitenquerschnittsansicht der Fahrzeugdachstruktur ebenfalls in geschlossener Position ist;
Fig. 3 die Fahrzeugdachstruktur gemäß Fig. 1 in perspektivischer Ansicht ist;
Fig. 4 ein Detail der Fahrzeugdachstruktur gemäß Fig. 1 in perspektivischer Ansicht ist, wobei in den Figuren jeweils Teile als durchsichtig zu veranschaulichenden Zwecken erscheinen, die beim Fahrzeug als Karosserie ausgebildet sind und somit die Innenstruktur verdecken;
Fig. 5 eine Draufsicht auf die erfindungsgemäße Fahrzeugdachstruktur ist, wobei Seitenbereiche des beweglichen Dachteils in eine Position für das anschließende Öffnen des beweglichen Dachteils eingeklappt sind;
Fig. 6 in Querschnittsansicht die erfindungsgemäße Dachstruktur beim Beginn des Öffnens mit eingeklappten Seitenteilen zeigt;
Fig. 7 in perspektivischer Ansicht die Fahrzeugdachstruktur beim Beginn des Öffnens entsprechend Fig. 6 zeigt;
Fig. 8 in der Draufsicht die erfindungsgemäße Fahrzeugdachstruktur in einem weiter fortgeschrittenem Öffnungszustand zeigt, wobei die Führungseinrichtung gerade in Kontakt mit dem Dachteil gelangt;
Fig. 9 in perspektivischer Ansicht die Fahrzeugdachstruktur im Öffnungszustand gemäß Fig. 8 zeigt;
Fig. 10 in perspektivischer Ansicht den Öffnungszustand gemäß Fig. 8 zeigt;
Fig. 11 in seitlicher Querschnittsansicht die Fahrzeugdachstruktur im Öffnungszustand gemäß Fig. 8 zeigt;
Fig. 12 in seitlicher Querschnittsansicht den Öffnungsvorgang in einem weiter fortgeschrittenen Öffnungszustand zeigt;
Fig. 13 in perspektivischer Ansicht den Öffnungszustand gemäß Fig. 12 darstellt;
Fig. 14 eine andere perspektivische Ansicht der Fahrzeugdachstruktur im Öffnungszustand nach Fig. 12 darstellt;
Fig. 15 einen noch weiter fortgeschrittenen Öffnungszustand in seitlicher Querschnittsansicht darstellt;
Fig. 16 den Kontakt der als Führungsrollen ausgebildeten Führungseinrichtung mit einer Führungsbahn des Kraftfahrzeugs im Öffnungszustand entsprechend Fig. 15 in perspektivischer Ansicht zeigt;
Fig. 17 einen noch weiter fortgeschrittenen Öffnungszustand des Fahrzeugdachs in seitlicher Querschnittsansicht zeigt;
Fig. 18 in seitlicher Querschnittsansicht einen Öffnungszustand des Fahrzeugdachs kurz vor der Endstellung zeigt;
Fig. 19 in der Draufsicht das Fahrzeugdach in geöffneter Position zeigt; und
Fig. 20 in seitlicher Querschnittsansicht die Endstellung des geöffneten Fahrzeugdachs zeigt.

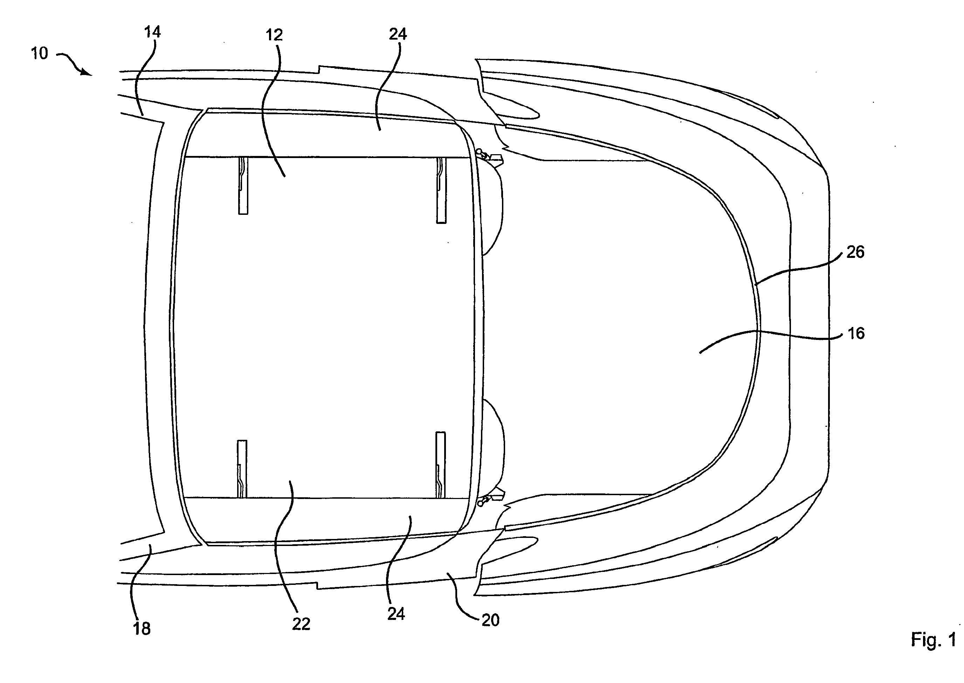

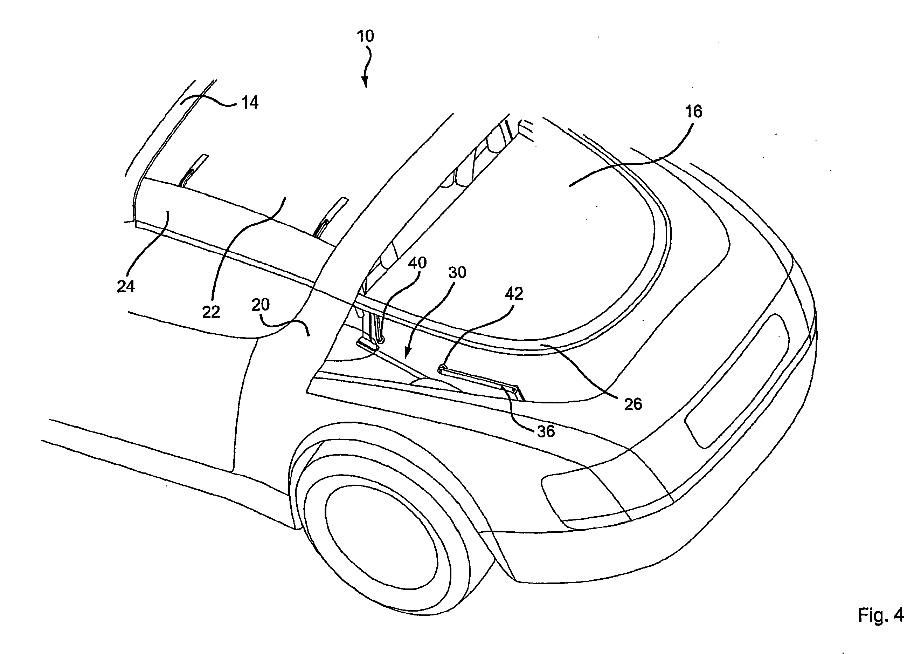

Die in Fig. 1 bis 4 in der geschlossenen Position dargestellte Fahrzeugdachstruktur 10 der ersten Ausführungsform umfasst ein bewegliches Dachteil 12, das sich in der geschlossenen Position von einem Windschutzscheibenrahmen 14 in Fahrzeuglängsrichtung zu einem hinteren Dachteil, das als Verdeckkastendeckel 16 ausgebildet ist, erstreckt, innerhalb dessen eine Heckscheibe integriert ist. Das bewegliche Dachteil 12 erstreckt sich also im wesentlichen zwischen A-Säule 18 und B-Säule 20 eines Fahrzeugs und liegt in geschlossener Position im wesentlichen horizontal in Einbaulage im Fahrzeug.

Das bewegliche Dachteil 12 ist in einen bezogen auf eine vertikale Längsmittelebene mittleren Bereich 22 und zwei Außenbereiche 24 geteilt.

Im Heckbereich des Fahrzeugs ist in der Draufsicht gemäß Fig. 1 ferner eine Öffnungslinie 26 der Karosserie zu erkennen, die gewöhnlich stark designorientiert ist und die die maximale Öffnung definiert, innerhalb derer das bewegbare Dachteil 12 in der Karosserie versenkt werden kann, da sie gleichzeitig die Grenzlinie zwischen dem bezüglich der Karosserie um eine Wesentlichen horizontalen Achse aufschwenkbaren Verdeckkastendeckel 16 und der Karosserie bildet.

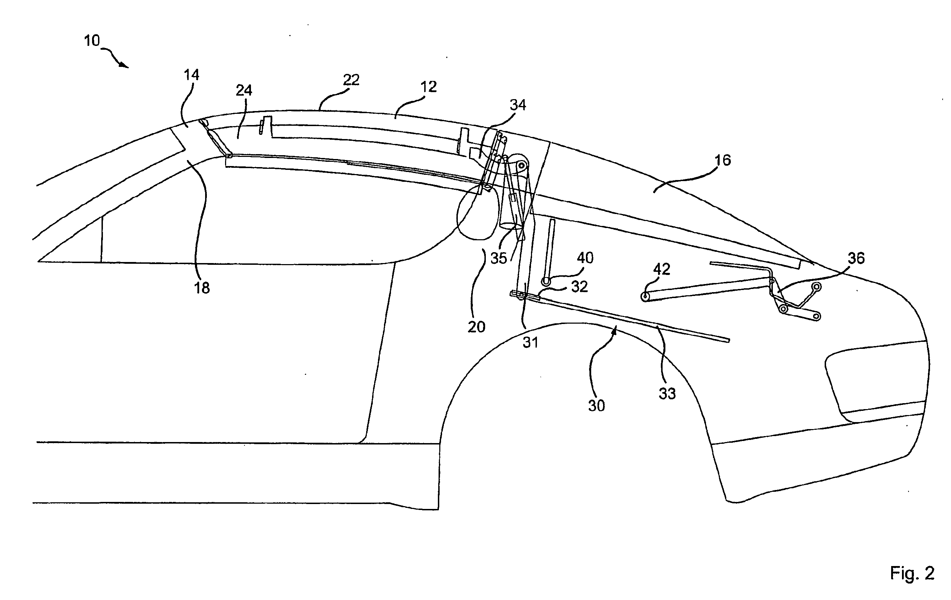

Zum Bewegen des bewegbaren Dachteils 12 und zum Einbringen von diesem in die Karosserie ist ferner ein Gestängemechanismus vorgesehen, der allgemein mit Referenzziffer 30 bezeichnet ist (siehe Fig. 2). Der Gestängemechanismus 30 umfasst einen Lenker 31, dessen eines Ende drehbar auf einem Schlitten 32 gelagert ist, der wiederum bezüglich der Karosserie des Fahrzeugs translatorisch entlang der Bahn 33, d.h. im wesentlichen in Längsrichtung des Fahrzeugs, verschiebbar ist. Dazu sind an sich bekannte Führungsmittel für den Schlitten 32 sowie ein Antrieb für den Schlitten, bevorzugter Weise elektrisch oder hydraulisch, nach Bedarf aber auch z.B. manuell, vorgesehen. Zur Verdrehung des Lenkers um den Lagerpunkt zwischen Lenker 31 und Schlitten 32 ist ebenfalls ein geeigneter Antriebsmechanismus vorgesehen, der bevorzugter Weise getrennt von dem Antriebsmechanismus für die translatorische Bewegung ansteuerbar ist.

Am freien Ende des Lenkers 31 ist drehbar ein weiterer Lenker 34 angebracht, dessen freies Ende mit dem beweglichen Dachteil 12 verbunden ist. Die Winkelposition zwischen dem Lenker 31 und dem Lenker 34 wird durch eine Gasfeder 35 in eine vorgegebene Winkelposition vorgespannt, in der die Lenker 31, 34 den Winkel α1 einschließen. Die Winkel α werden dabei in der Fahrzeuglängsebene aufgespannt.

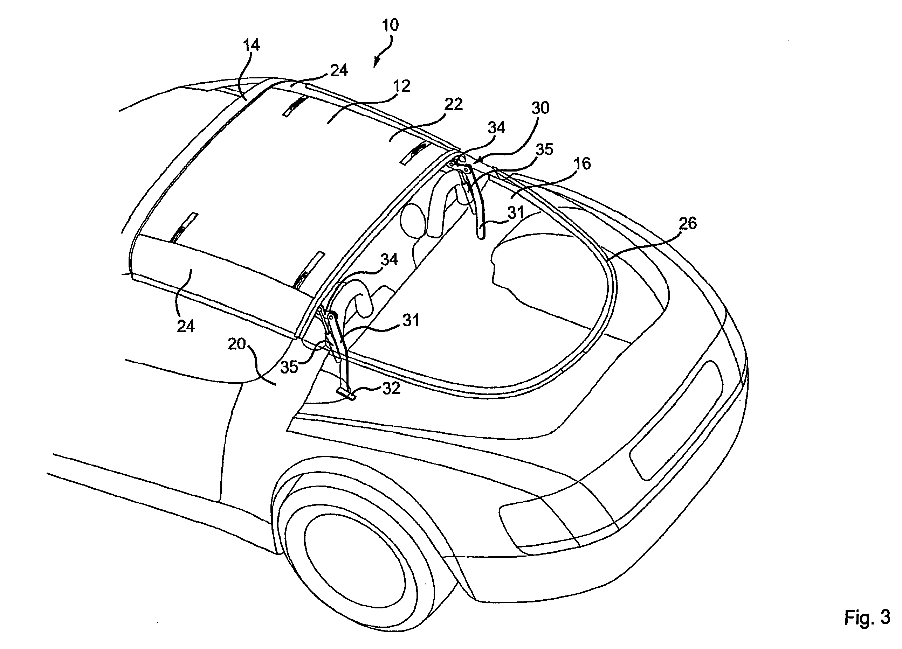

Wie es aus Fig. 3 zu erkennen ist, ist bevorzugter Weise eine entsprechende Lenkeranordnung an beiden Seiten des beweglichen Dachteils, d.h. des Fahrzeugs, vorgesehen, also insbesondere symmetrisch zu einer Längsmittelebene des Fahrzeugs. Dies bietet den Vorteil, ein gleichmäßiges Öffnen zu gewährleisten, da Stellkräfte symmetrisch auf das Dachteil aufgebracht werden. Im folgenden wird jeweils nur einer der Gestängemechanismen erläutert. Der symmetrisch angeordnete, zweite Gestängemechanismus ist im Wesentlichen identisch aufgebaut.

Für die Bewegung des hinteren Dachteils 16, der um eine Achse senkrecht zur Fahrzeuglängsrichtung aufschwenkbar ist, ist ebenfalls eine Gestängemechanismus vorgesehen, der mit Referenzziffer 36 bezeichnet ist. Dieser Gestängemechanismus 36 wird durch einen (nicht dargestellten) Antrieb bewegt.

Schließlich weist die Anordnung noch einen Führungsmechanismus auf. Der Führungsmechanismus ist vorzugsweise ebenfalls zweifach und symmetrisch bezüglich der Längsmittelebene des Fahrzeugs ausgebildet. In der dargestellten Ausführungsform wird er durch zwei Rollenpaare als Führungselemente gebildet, von denen das erste Rollenpaar 40 an einem Arm ortsfest bezüglich des hinteren Dachteils angebracht ist (in Fig. 2 ist eine Rolle 40 zu erkennen; die zweite Rolle des Rollenpaars ist symmetrisch bezüglich der Fahrzeuglängsmittelebene am Dachteil 16 vorgesehen). Das zweite Rollenpaar 42 ist am Gestängemechanismus 36 zur Öffnung bzw. zum Schließen des hinteren Dachteils 16 vorgesehen. Insbesondere führt die Rolle 42 also eine Bewegung entsprechend der des Gestängemechanismus 36 zur Bewegung des hinteren Dachteils 16 und zusammen mit diesem aus. Statt der Rollen sind auch andere abwälzende oder gleitende Elemente als Führungselemente, wie z.B. Gleitschuhe, einsetzbar.

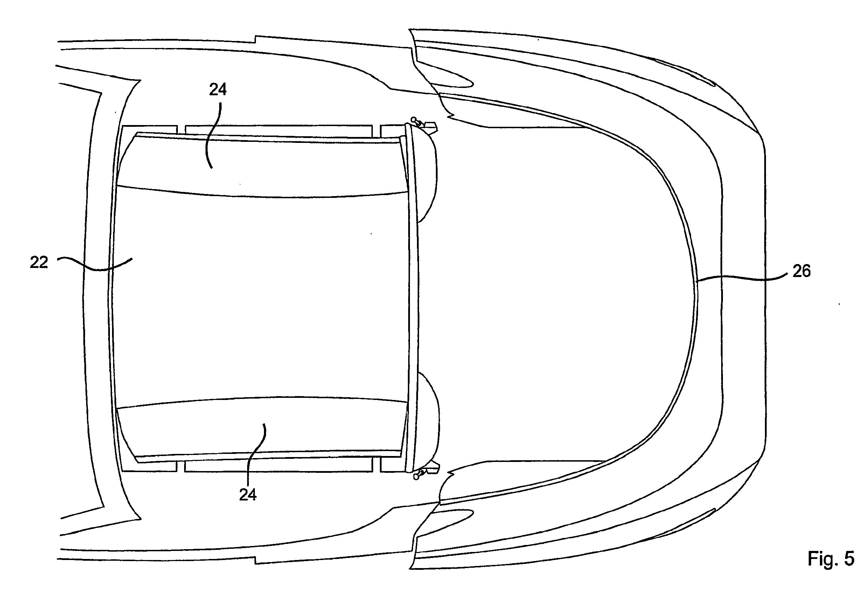

Nachfolgend wird anhand der Fig. 5 bis 20 die Öffnung des Fahrzeugdachs mit der Fahrzeugdachstruktur 10 gemäß Fig. 1 bis 4 sowie das Einbringen des bewegbaren Fahrzeugdachteils in einen Raum im Fahrzeugheck unterhalb des Verdeckkastendeckels 16 beschrieben.

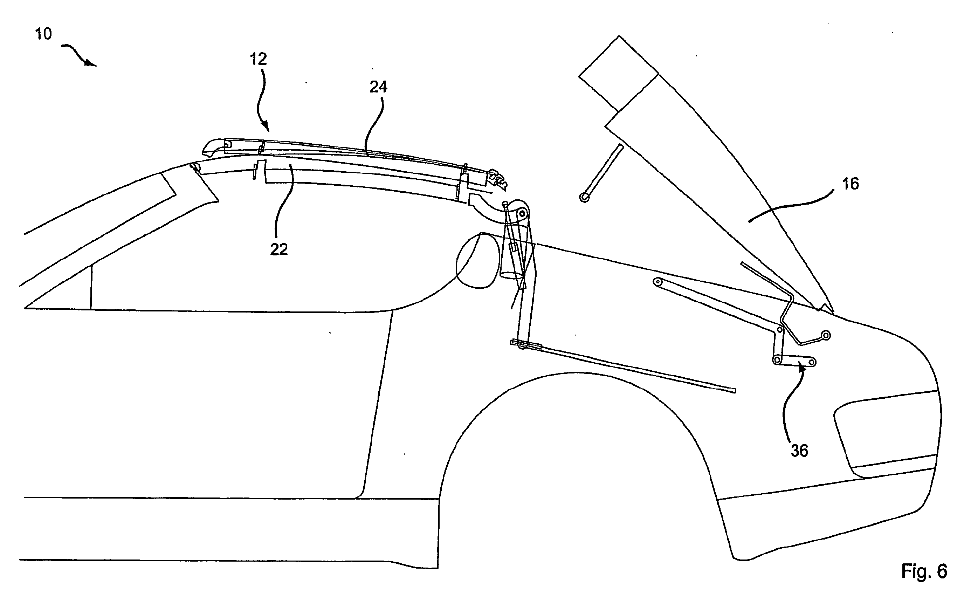

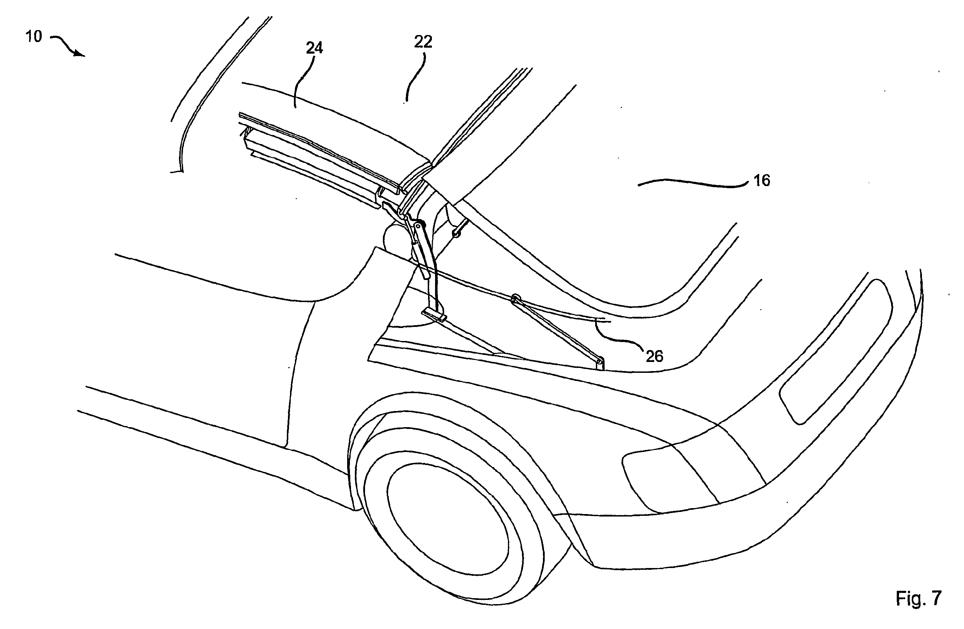

Zunächst wird ausgehend von der in Fig. 1 bis 4 dargestellten geschlossenen Position des bewegbaren Dachteils 12 dieses durch einen (nicht im einzelnen dargestellten) Mechanismus hinsichtlich seiner Breite verkleinert. Dazu werden die seitlichen Dachteile 24 um eine Achse, die im wesentlichen parallel zur Fahrzeuglängsachse verläuft, auf das mittlere Dachteil 22 geschwenkt. Eine entsprechende Struktur zur Bewegung der seitlichen Dachteile ist in der DE 02 54 365 (siehe Beschreibungseinleitung) erläutert. Außerdem wird in einem ersten Schritt der Verdeckkastendeckel 16, d.h. das hintere Dachteil, um eine Schwenkachse senkrecht zur Fahrzeuglängsrichtung mittels des Gestängemechanismus 36 aufgeschwenkt, wie es in Fig. 6 und 7 zu erkennen ist. Dadurch wird eine Öffnung im Fahrzeugheck umgrenzt durch die Öffnungslinie 26 (siehe Fig. 5) derart frei gegeben, dass sie den Aufnahmeraum für den beweglichen Dachteil 12 begrenzt, so dass das bewegliche Dachteil 12 in den hinteren Fahrzeugbereich verbracht werden kann und in der Karosserie versenkt werden kann.

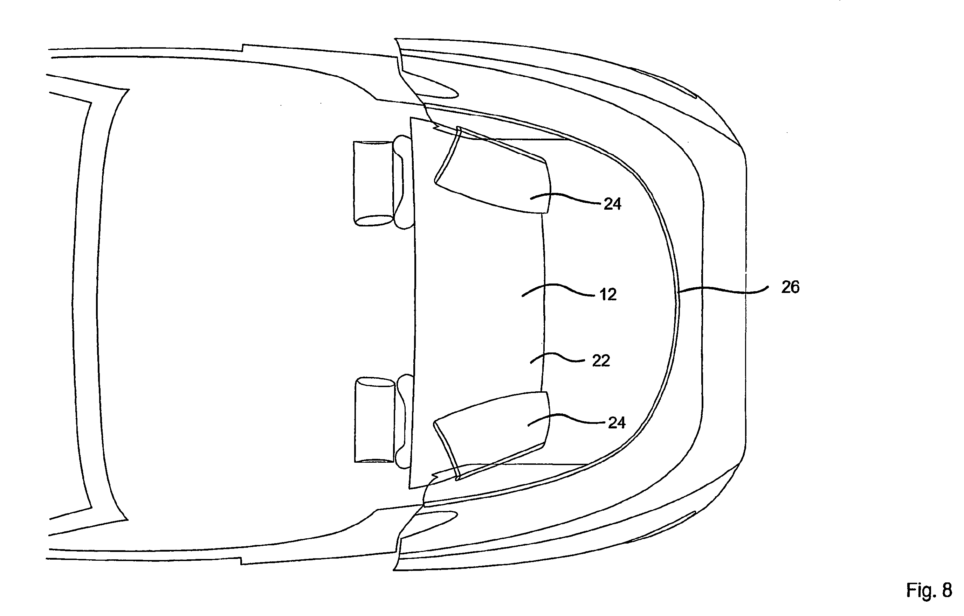

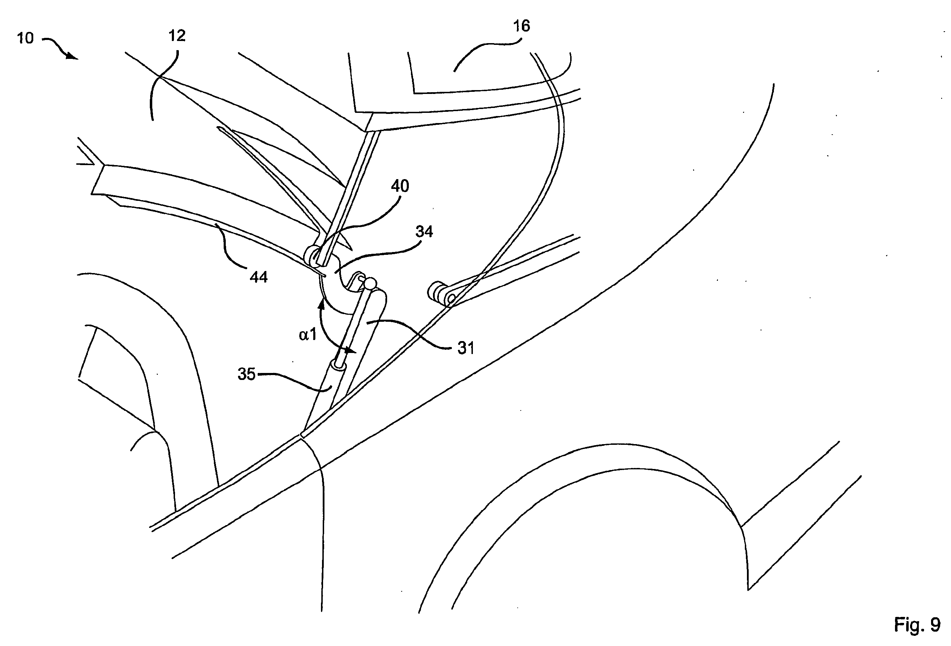

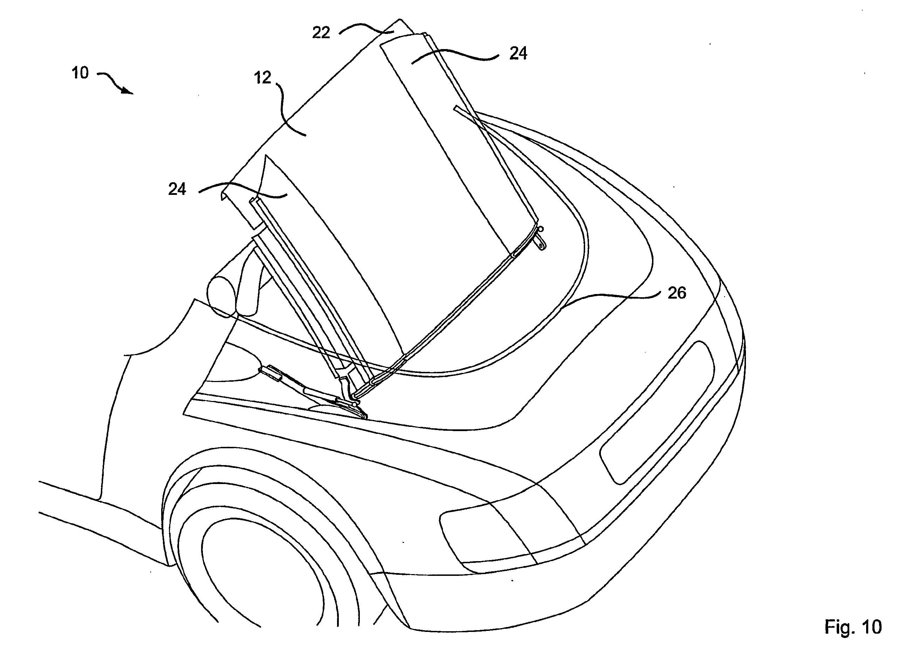

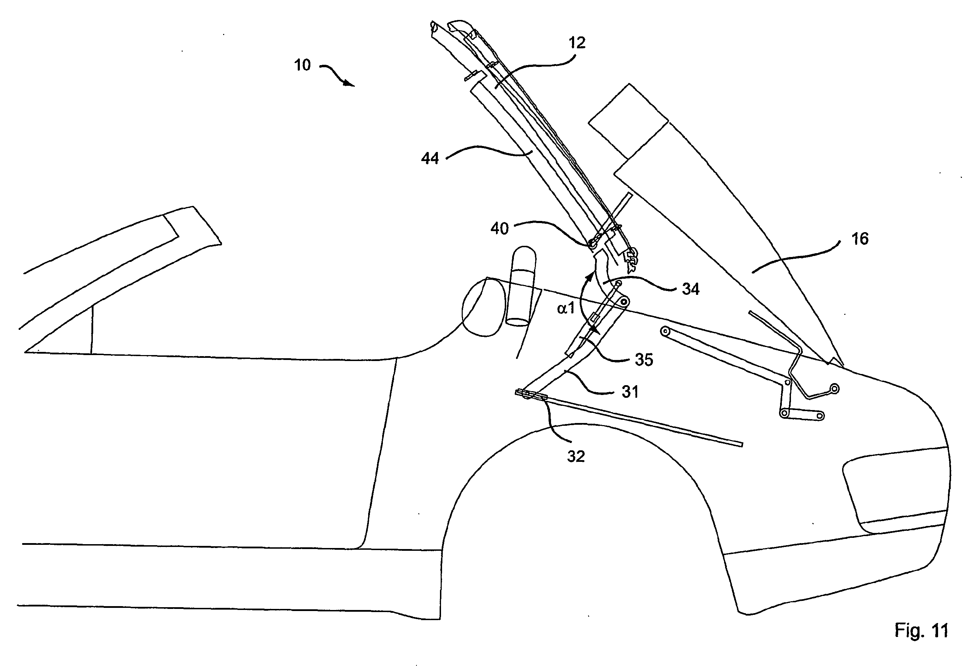

In dem Zustand, in dem die seitlichen Dachteile 24 auf dem mittleren Dachteil 22 abgelegt sind, beginnt anschließend die Schwenkbewegung des beweglichen Dachteils 12 zum Einbringen in die Fahrzeugkarosserie. Der erste Teil der Schwenkbewegung, bei dem das bewegliche Dachteil nicht in Kontakt mit der Führungseinrichtung, die durch die Rollenpaare 40 bzw. 42 dargestellt wird, ist, wird durch den Gestängemechanismus 30 bewirkt und ist in Fig. 8 bis 11 gezeigt, wobei in Fig. 8 und 10 aus Übersichtlichkeitsgründen das hintere Dachteil (Verdeckkastendeckel) 16 nicht dargestellt ist. Zum Auslösen der Schwenkbewegung für das bewegliche Dachteil wird der Lenker 31 mittels eines nicht dargestellten Antriebs, z.B. eines Hydraulikantriebs oder eines Elektroantriebs, um seine Lagerstelle auf dem Schlitten 32 geschwenkt und zwar in Richtung im Uhrzeigersinn, so dass das freie Ende des Lenkers 31, an dem der Lenker 34 angebracht ist, aus der in Fig. 2 dargestellten Position in die in Fig. 9 und 11 dargestellte Position rückwärts, d.h. in Richtung auf das Fahrzeugheck geschwenkt wird. Beim Beginn der Schwenkbewegung ist dabei keine der Führungsrollen 40, 42 in Kontakt mit einer Führungsbahn 44 des Dachteils. Außerdem wird der Schlitten 32 bezüglich seiner translatorischen Verschiebebewegung ortsfest gehalten, d.h. in der Position, die am meisten in Richtung Fahrzeugfront gerichtet ist (siehe Fig. 11). Die Gasfeder 35 zwischen dem Lenker 31 und dem Lenker 34 stellt dabei sicher, dass der Lenker 31 mit dem Lenker 34 einen Winkel α1 einnimmt, der der Ruhestellung der Lenker zueinander, d.h. einer Stellung ohne Einwirkung der Führungseinrichtung, entspricht. Dieser Winkel α1 bleibt unverändert, solange das Rollenpaar 40 der Führungseinrichtung nicht mit dem Dachteil oder Gestängemechanimus in Kontakt gelangt.

Durch die Schwenkbewegung des Lenkers 31 wird das daran angebrachte bewegliche Dachteil 12 mitbewegt und ebenfalls rückwärts geschwenkt, bis eine am Dachteil ausgebildete Führungsbahn 44 (es sind selbstverständlich ebenfalls bevorzugter Weise zwei Führungsbahnen 44 vorgesehen, die an dem beweglichen Dachteil symmetrisch zu einer Fahrzeuglängsmittelebene angebracht sind) mit dem Rollenpaar 40 der Führungseinrichtung in Kontakt kommt (siehe Fig. 9, 11). Die Führungsbahn 44 kann dabei entweder verdeckt gestaltet sein, so dass sie nicht sichtbar ist, wenn das bewegliche Fahrzeugdach 12 geschlossen ist. Sie kann aber auch als Zierleiste ausgebildet sein, die in der geschlossenen Stelle des beweglichen Dachteils sichtbar ist, auf der die Rollen 40 der Führungseinrichtung laufen.

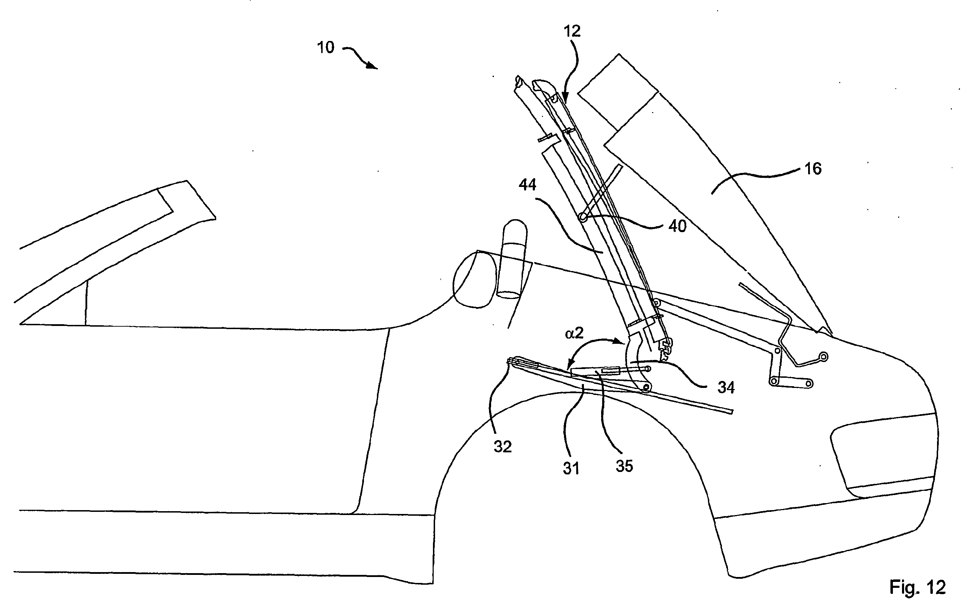

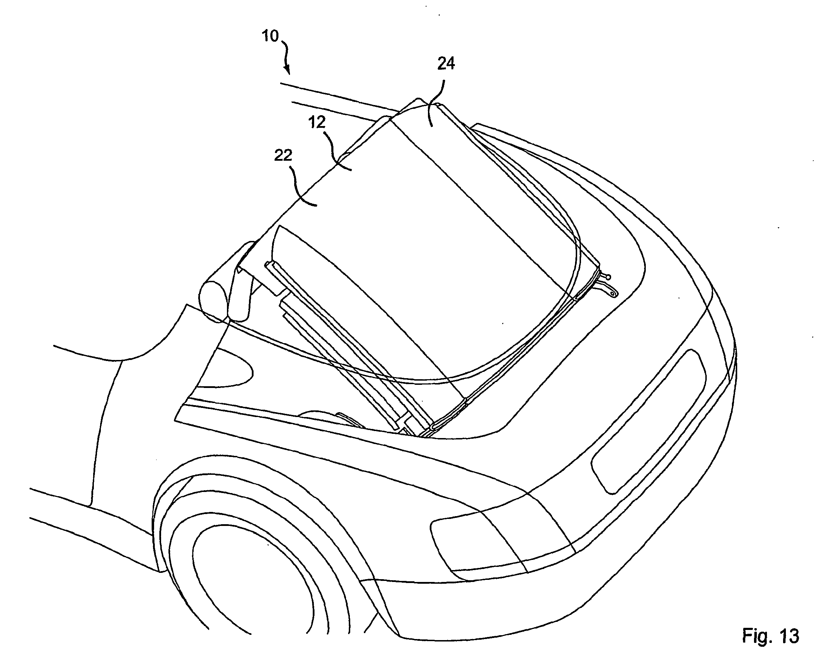

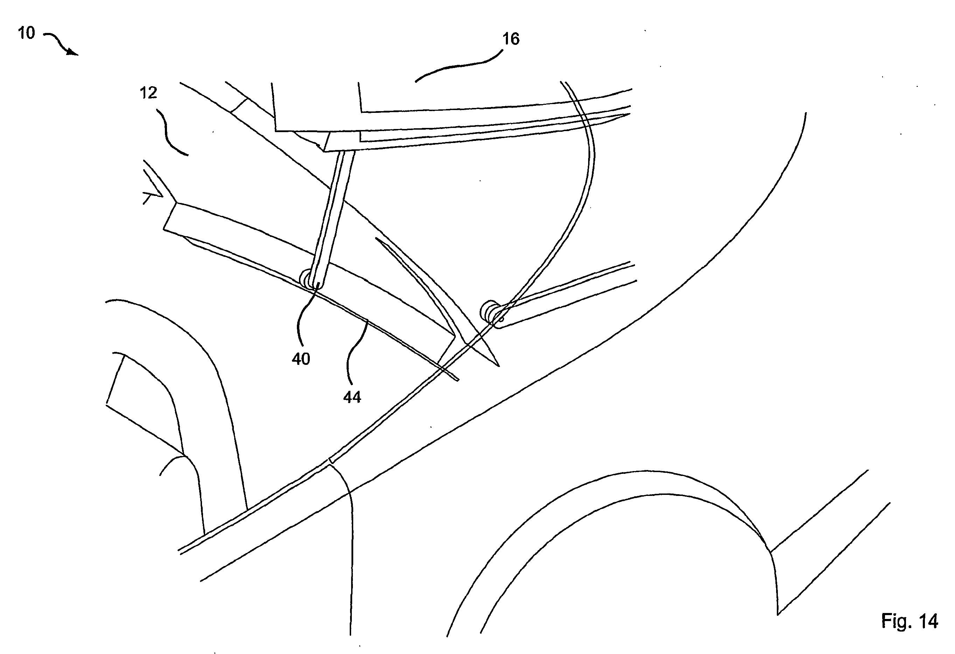

Nach der Schwenkbewegung bis hin in die in Fig. 8-11 gezeigte Position gelangt die Führungsbahn 44 in Kontakt mit dem ersten Rollenpaar 40. Der Lenker 31 wird nachfolgend durch den Antrieb weiter um seinen Rotationspunkt am Schlitten 32 geschwenkt, bis er in eine horizontale Lage gelangt, in der das freie Ende des Lenkers 31, an dem der Lenker 34 angelenkt ist, heckseitig liegt. Er wird dabei in der Richtung im Uhrzeigersinn gemäß der Darstellung in den Figuren geschwenkt. Der Schlitten 32 wird weiterhin ortsfest gehalten. Da jedoch die Führungsbahn 44 und die Rollen 40 miteinander in Kontakt sind, wird auf die Lenkeranordnung 31, 34 eine Kraft aufgebracht, die der Vorbelastungsrichtung der Gasfeder 35 entgegenwirkt. Dadurch wird bewirkt, dass sich die Lenker 31, 34 zueinander verdrehen, d.h. insbesondere der Lenker 34 in Richtung auf den Lenker 31 gegen den Uhrzeigersinn in Fig. 12 um eine Achse senkrecht zur Fahrzeuglängsrichtung einklappt, so dass der ohne Einwirkung der Führungseinrichtung eingestellte Öffnungswinkel α1 zwischen dem Lenker 31 und dem Lenker 34 in einen Winkel α2 verkleinert wird (Fig. 12). Die Führungsbahn 44 und die Rolle 40 des Rollenpaars rollen dabei aufeinander ab, so dass das Dachteil 12 bezüglich der Schwenkbewegung ohne Einwirkung des Rollenpaars 40 eine Richtungsänderung seiner Bewegungsbahn erfährt und gleichzeitig auf einem definierten Weg in die Karosserie weitergeführt wird. Der Schlitten 32 wird dabei noch nicht angetrieben, sondern vielmehr in seiner Ausgangsposition (Position in Fahrzeug Vorwärtsfahrrichtung vorne) gehalten. Bis zu diesem Zeitpunkt ist somit lediglich ein Antrieb des Lenkers 31 zur Bewegung des beweglichen Dachteils 12 erforderlich. Der in Fig. 12 im Querschnitt dargestellte Eintauchzustand des beweglichen Dachteils 12 in die Karosserie ist in Fig. 13 und 14 in perspektivischer Ansicht gezeigt.

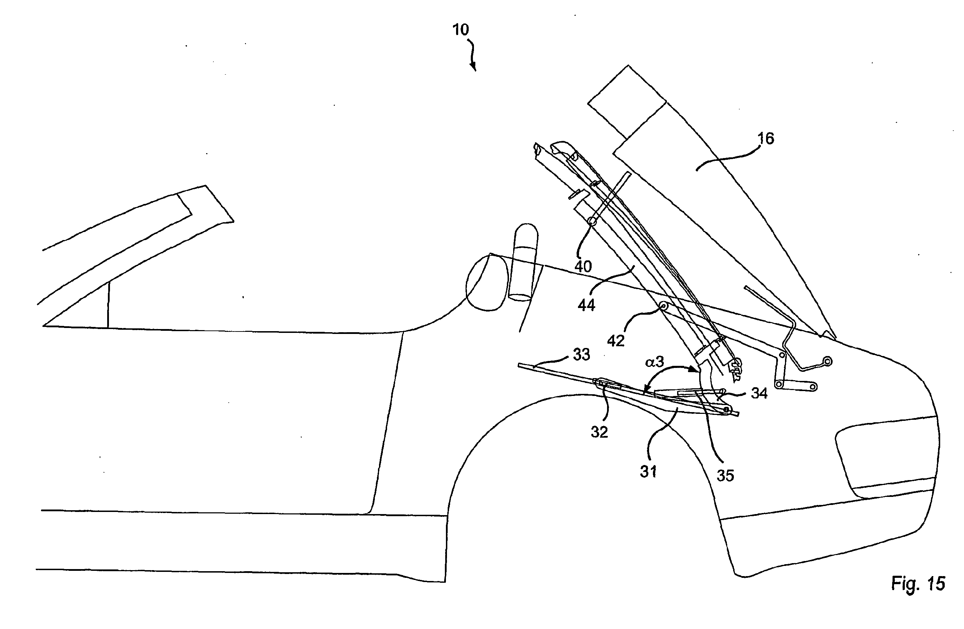

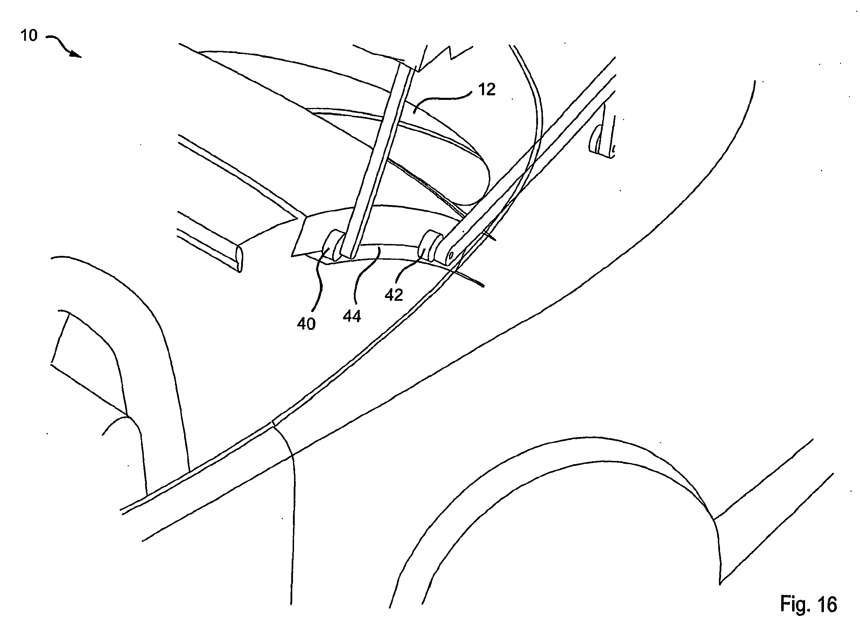

Nachdem der Lenker 31 in die horizontale Position, d.h. in seine Maximalschwenkstellung gelangt ist, in der der Lenker 31 und der Lenker 34 zueinander den Winkel α2 durch die Einwirkung der Führungsrolle 40 gegen die Vorspannkraft der Gasfeder einnehmen, wird anschließend ein Antrieb für den Schlitten 32, der ebenfalls nach Bedarf als Elektroantrieb, Hydraulikantrieb oder anderes gestaltet sein kann, aktiviert, und der Schlitten 32 wird, wie es in Fig. 15 und 16 dargestellt ist, angetrieben, so dass er sich entlang der Bahn 33 in Richtung auf das Fahrzeugheck zubewegt. Dabei ist die Führungsrolle 40 weiterhin in Kontakt mit der Führungsbahn 44 des beweglichen Dachteils 12. Dies bedeutet, dass das bewegliche Dachteil, insbesondere das mittlere Dachteil 22 mit den darauf aufgeklappten seitlichen Dachteilen 24, weiterhin durch die Rolle 40 einer Schwenkbewegung um den Drehpunkt zwischen dem Lenker 31 und dem Lenker 34 unterliegt, so dass der Winkel α weiter gegen die Wirkung der Gasfeder 35 verkleinert wird. Wie es in Fig. 15 zu erkennen ist, ist bei dieser Schwenkbewegung zunächst die Rolle 42 des Rollenpaars noch nicht in Kontakt mit der Führungsbahn 44.

Nach einem vorgegebenen Bewegungsweg des Schlittens 32 entlang der Bahn 33 gelangt das Rollenpaar 42, wie es in Fig. 15 gezeigt ist, ebenfalls in Kontakt mit der Führungsbahn 44. Das Rollenpaar 40 ist in dieser Position nahezu vollständig entlang der Führungsbahn 44 des beweglichen Dachteils 12 abgerollt, d.h. vom Heckende des beweglichen Dachteils 12 hin in Richtung auf das Frontende. In der Position, in der das zweite Rollenpaar 42 in Kontakt mit der Führungsbahn 44 gelangt, nehmen die Lenker 31 und 34 zueinander den Winkel α3 ein (Fig. 15). Der Lenker 31 wird nicht mehr weiter um den Gelenkpunkt am Schlitten 32 geschwenkt, sondern unterliegt nur noch der translatorischen Bewegung entlang der Bahn 33 zusammen mit den Schlitten 32 und bleibt in der horizontalen Position.

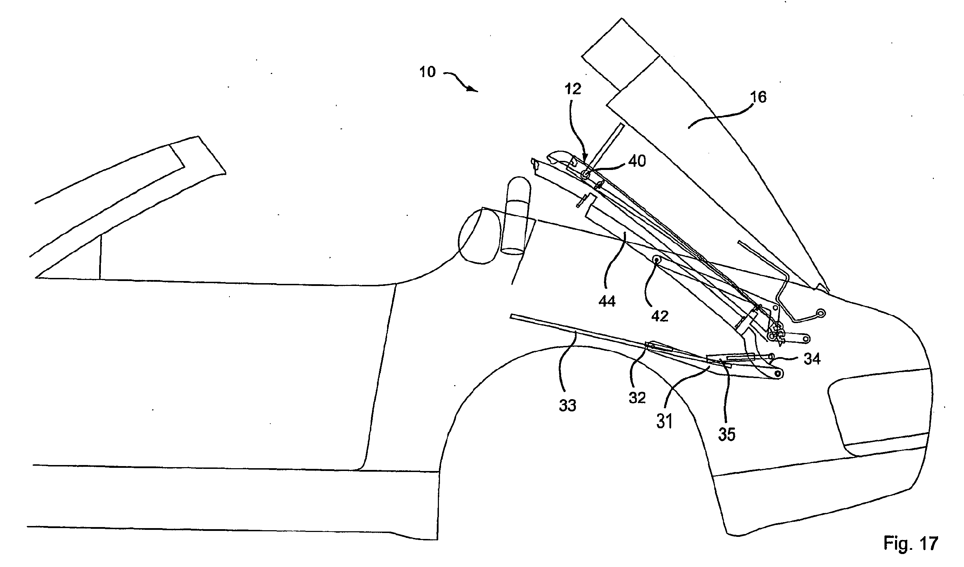

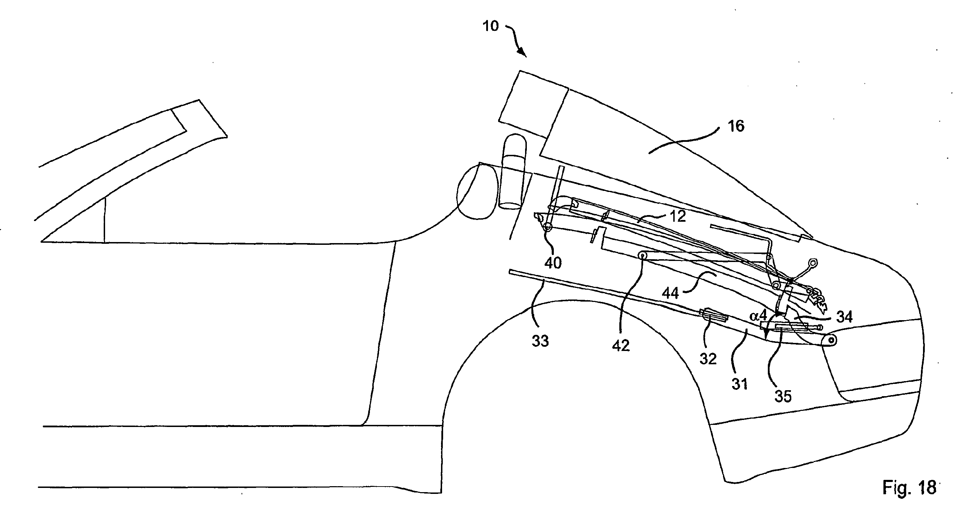

Nachdem die Rolle 42 des Rollenpaars mit der Führungsbahn 44 in Kontakt gelangt ist, wird der Bewegungsbahn des beweglichen Dachteils 12 eine weitere Richtungsänderung auferlegt. Insbesondere wird, wie es in Fig. 17 und 18 gezeigt ist, der Schlitten 32 bis in seine hintere Endstellung (siehe Fig. 18) translatorisch weiterbewegt, so dass die Bewegungsbahn des Dachteils eine weitere Schließbewegung der Lenker 31 und 34 zueinander gegen die Wirkung der Gasfeder 35 hervorruft, bis die Lenker 31 und 34 und damit das Dachteil 12 in der in Fig. 18 gezeigten Position angelangt sind. Die Führungsarbeit wird dabei von der Rolle 42 übernommen. Die Lenker 31, 34 nehmen in der Endstellung, die in Fig. 18 gezeigt ist, einen Winkel α4 zueinander ein. Die Rollen 40 gelangen außer Eingriff der Führungsbahn 44, so dass die Führung in diesem Abschnitt des Bewegungswegs allein durch die Rollen 42 bewirkt wird.

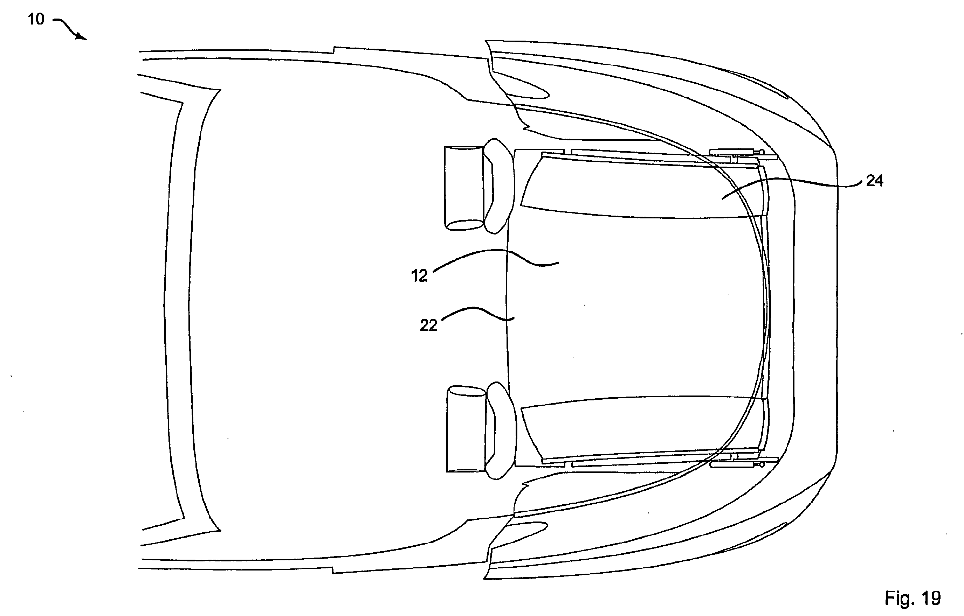

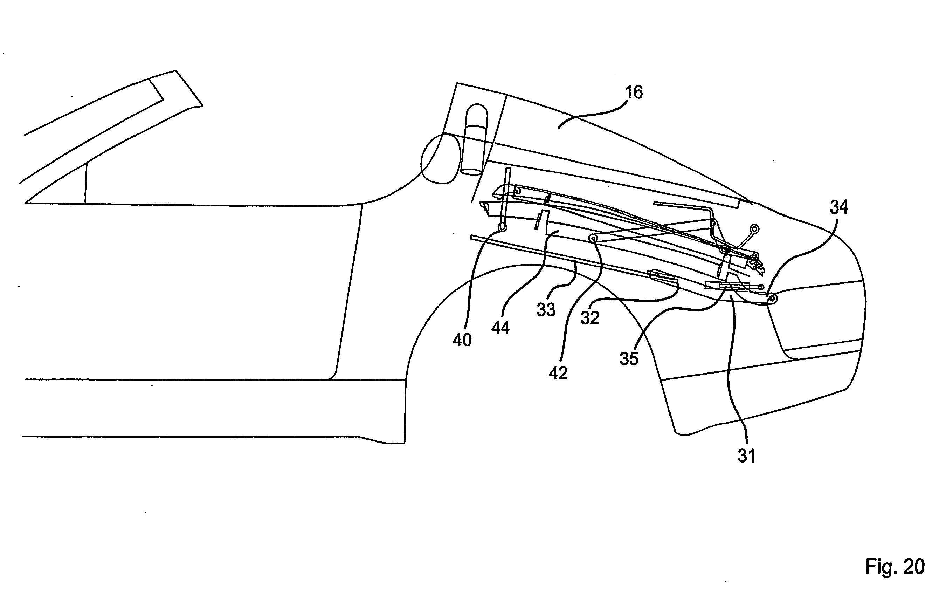

Zum endgültigen Einbringen des beweglichen Dachteils 12 in die Karosserie, nachdem der Schlitten 32 das Ende der Bahn 33 erreicht hat, wird durch weiteren Kontakt des Führungsrollenpaars 42 die endgültige Schließposition erreicht, indem das hintere Dachteil 16 mittels der Gestängeeinrichtung 36, an dem die Rolle 42 angebracht ist, eingeschwenkt wird, d.h. in seine geschlossene Position gebracht wird. Da die Rolle unmittelbar mit dem Verdeckdeckel 16 verbunden ist und somit durch den Antrieb zum Schließen des Verdeckkastenteils 16, der ebenfalls nach Bedarf als Elektroantrieb, Hydraulikantrieb oder ähnliches gestaltet sein kann, bewegt wird, wird das bewegliche Dachteil unmittelbar zusammen mit dem Verdeckdeckel angetrieben und in seine Endposition geschwenkt. Da die Rollen 40 nicht mehr in Kontakt mit der Führungsbahn 44 sind, behindern sie die Schließbewegung nicht. Somit bewirkt der Druckkontakt der Rolle 42 auf die Führungsbahn 44 eine weitere Richtungsänderung der Bewegungsbahn des Dachteils 12. Die Endposition ist in perspektivischer Ansicht in Fig. 19 sowie in Querschnittsansicht in Fig. 20 gezeigt.

Durch das erläuterte System, das insgesamt drei getrennt ansteuerbare und zeitlich versetzt betriebene Antriebe verwendet (einen für die Drehbewegung des Lenkers 31, einen für den Schlitten 32 und eine für die Schwenkbewegung des Verdeckkastengestängemechanismus 36), kann eine exakt definierte Bewegungsbahn erreicht werden, so dass das bewegliche Dachteil 12 auch bei eingeschränkten Platzverhältnissen in eine verhältnismäßig stark eingeschränkte Öffnung 26 der Karosserie eingebracht werden kann.

Statt der beschriebenen Gestänge und Gasfedern können auch andere Arten von Vorspanneinrichtungen bzw. Bewegungseinrichtungen verwendet werden, solange als wesentlicher Aspekt der Erfindung eine getrennt von dem angetriebenen Gestängemechanismus zur Bewegung des bewegbaren Dachteils vorgesehene Führungseinrichtung angebracht ist, die zumindest entweder bezüglich des Verdeckkastendeckels oder der Karosserie ortsfest ist und die beim Kontakt mit der Bewegungsbahn des bewegbaren Dachteils eine Richtungsänderung der Bewegungsbahn initiiert. Beim Schließen des Dachteils werden die Bewegungen in umgekehrter Richtung ausgeführt.

### Bezugszeichenliste

- 10: Fahrzeugdachstruktur
- 12: beweglicher Dachteil
- 14: Windschutzscheibenrahmen
- 16: hinterer Dachteil (Verdeckkastendeckel)
- 18: A-Säule
- 20: B-Säule
- 22: mittlerer Dachteil
- 24: seitlicher Dachteil
- 26: Öffnungslinie
- 30: Gestängemechanismus
- 31: Lenker
- 32: Schlitten
- 33: Bahn
- 34: Lenker
- 35: Gasfeder
- 36: Gestängemechanismus
- 40: Rollenpaar
- 42: Rollenpaar
- 44: Führungsbahn
- α1: Winkel zwischen Lenker 31 und Lenker 34 ohne Einwirkung der Führungseinrichtung
- α2: Winkel zwischen Lenker 31 und Lenker 34 mit Einwirkung des Rollenpaars 40
- α3: Winkel zwischen Lenker 31 und Lenker 34 mit Einwirkung des Rollenpaars 40
- α4: Winkel zwischen Lenker 31 und Lenker 34 mit Einwirkung des Rollenpaars 42

## Patentansprüche

1. Fahrzeugdachstruktur (10) mit zumindest einem heckseitigen Verdeckkastendeckel (16) und einem zwischen einer Offen- und einer Schließstellung beweglichen, starren Dachteil (12), das sich in Schließstellung zwischen einem Windschutzscheibenrahmen (14) des Fahrzeugs und dem Verdeckkastendeckel (16) erstreckt und das in Offenstellung in einem Raum unter dem Verdeckkastendeckel (16) aufgenommen ist, wobei das Dachteil (12) zwischen der Schließstellung und der Offenstellung durch einen Gestängemechanismus (30, 36) bewegbar ist und zusätzlich zumindest eine Führungseinrichtung (40, 42, 44) vorgesehen ist,
**dadurch gekennzeichnet,**
**dass** das Dachteil (12) mit der Führungseinrichtung (40, 42, 44) auf einem Teil seiner Bewegungsbahn zwischen der Offen- und der Schließstellung in Berührung ist; die Führungseinrichtung (40, 42, 44) mindestens ein Führungselement, das am Verdeckkastendeckel (1-6) oder der Fahrzeugkarosserie gelagert ist und das mit einer am Dachteil vorgesehenen Führungsbahn (44) bei der Bewegung des Dachteils von der Schließ- in die Offenstellung in Eingriff gelangt und sich darauf entlangbewegt, aufweist, wobei eine Richtungsänderung der Bewegungsbahn des Dachteils (12) bewirkt wird, wenn die Führungseinrichtung mit dem Dachteil in Berührung gelangt.

2. Fahrzeugdachstruktur (10) nach Anspruch 1,
**dadurch gekennzeichnet,**
**dass** die Führungseinrichtung mindestens eine Rolle (40, 42), umfasst.

3. Fahrzeugdachstruktur (10) nach Anspruch 1 oder 2,
**dadurch gekennzeichnet,**
**dass** die Führungseinrichtung ein erstes und ein zweites Führungselement, vorzugsweise zwei Rollen (40, 42), umfasst, die am Verdeckkastendeckel (16) derart zueinander beabstandet gelagert sind, dass sie jeweils eine Richtungsänderung der Bewegungsbahn des Dachteils (12) bei dessen Bewegung von der Schließ- in die Offenstellung bewirken.

4. Fahrzeugdachstruktur (10) nach Anspruch 3,
**dadurch gekennzeichnet,**
**dass** die Bewegungsbahn des Dachteils (12) von der Schließ- in die Offenstellung einen ersten Abschnitt, in dem die Führungseinrichtung nicht in Berührung mit dem Dachteil ist, einen zweiten Abschnitt, in dem das erste Führungselement (40) mit der Führungsbahn (44) des Dachteils (12) in Berührung ist, und einen dritten Abschnitt, in dem das zweite Führungselement (42) mit der Führungsbahn (44) des Dachteils (12) in Berührung ist und das erste Führungselement (40) nicht mit der Führungsbahn (44) des Dachteils in Berührung ist, umfasst.

5. Fahrzeugdachstruktur (10) nach Anspruch 3 oder 4,
**dadurch gekennzeichnet,**
**dass** die Führungsbahn (44) durch eine auf der Oberfläche des Dachteils angebrachte Zierleiste gebildet wird.

6. Fahrzeugdachstruktur (10) nach einem der vorhergehenden Ansprüche,
**dadurch gekennzeichnet,**
**dass** der Gestängemechanismus (30) eine fahrzeugkarosserieseitig drehbar gelagerte Lenkeranordnung mit zwei zueinander drehbaren Lenkern (31, 34) und einer Vorspanneinrichtung (35) umfasst, wobei die Drehachsen der Lenker zueinander und die Drehachse der Lenkeranordnung bezüglich der Fahrzeugkarosserie im Wesentlichen parallel verlaufen und wobei die Lenker (31, 34) zueinander durch die Vorspanneinrichtung (35) in eine vorgegebene erste Winkelstellung (α1) ausgerichtet sind und gegen die Vorspannwirkung der Vorspanneinrichtung durch die Berührung der Führungseinrichtung (40, 42, 44) mit dem Dachteil in eine zweite Winkelstellung (α2, α3, α4) bewegt werden.

7. Fahrzeugdachstruktur (10) nach Anspruch 6,
**dadurch gekennzeichnet,**
**dass** die Lenkeranordnung (31, 34) zusätzlich bezüglich der Fahrzeugkarosserie translatorisch verschiebbar gelagert ist.

8. Fahrzeugdachstruktur (10) nach einem der vorhergehenden Ansprüche,
**dadurch gekennzeichnet,**
**dass** der Gestängemechanismus (30, 36) einen mit dem Verdeckkastendeckel verbundenen Lenker aufweist, der mit der Führungseinrichtung (40, 42, 44) derart verbunden ist, dass bei einer Schließbewegung des Verdeckkastendeckels (16) die Führungseinrichtung eine entsprechende Schwenkbewegung des Dachteils (12) bewirkt.

9. Fahrzeugdachstruktur (10) nach einem der vorhergehenden Ansprüche,
**dadurch gekennzeichnet,**
**dass** das Dachteil (12) derart in mehrere zusammenhängende Bereiche (22, 24) geteilt ist, dass es durch Verlagerung von Bereichen zwischen einer verschmälerten und einer normalen Breite variierbar ist und in verschmälerter Breite zwischen seiner Offen- und Schließstellung beweglich ist.

10. Kraftfahrzeug mit einer Fahrzeugdachstruktur (10) nach einem der vorhergehenden Ansprüche.

## Claims

1. Vehicle roof structure (10) having at least one rear-side convertible top compartment lid (16) and a rigid roof part (12) that is movable between an opened- and a closed position, which roof part (12) extends in the closed position between a windshield frame (14) of the vehicle and the convertible top compartment lid (16) and in the opened position is accommodated in a space underneath the convertible top compartment lid (16), wherein the roof part (12) is movable between the closed position and the opened position by a linkage mechanism (30, 36) and at least one guide device (40, 42, 44) is additionally provided,
**characterized in that**,
the roof part (12) is in contact with the guide device (40, 42, 44) at one portion of its movement path between the opened- and closed position; the guide device (40, 42, 44) includes at least one guide element, which is borne on the convertible top compartment lid (16) or the vehicle body and arrives in engagement with a guide path (44) provided on the roof part when moving the roof part from the closed position into the opened position and moves in contact there along, wherein a directional change of the movement path of the roof part (12) is effected when the guide device arrives in contact with the roof part.

2. Vehicle roof structure (10) according to claim 1,
**characterized in that**,
the guide device comprises at least one roller (40, 42).

3. Vehicle roof structure (10) according to claim 1 or 2,
**characterized in that**,
the guide device comprises a first and a second guide element, preferably two rollers (40, 42), that are borne on the convertible top compartment lid (16) displaced from each other, such that they each effect a directional change on the movement path of the roof part (12) when it moves from the closed position into the opened position.

4. Vehicle roof structure (10) according to claim 3,
**characterized in that**,
from the closed position to the opened position, the movement path of the roof part (12) comprises a first segment, in which the guide device is not in contact with the roof part, a second segment, in which the first guide element (40) is in contact with the guide path (44) of the roof part (12), and a third segment, in which the second guide element (42) is in contact with the guide path (44) of the roof part (12) and the first guide element (40) is not in contact with the guide path (44) of the roof part.

5. Vehicle roof structure (10) according to claim 3 or 4,
**characterized in that**,
the guide path (44) is formed by an ornamental strip mounted on the surface of the roof part.

6. Vehicle roof structure (10) according to one of the preceding claims,
**characterized in that**,
the linkage mechanism (30) comprises a rotatably-borne connecting rod assembly, which is mounted on the vehicle body side, having two connecting rods (31, 34) that are rotatable with respect to each other and a biasing device (35), wherein the rotational axis of the connecting rods with respect to each other and the rotational axis of the connecting rod assembly extend essentially in parallel relative to the vehicle body and wherein the connecting rods (31, 34) are oriented with respect to each other in a predetermined first angular position (α1) by the biasing device (35) and are moved against the biasing influence of the biasing device into a second angular position (α2, α3, α4) by the contact of the guide device (40, 42, 44) with the roof part.

7. Vehicle roof structure (10) according to claim 6,
**characterized in that**,
the connecting rod assembly (31, 34) is additionally borne in a linearly displaceable manner relative to the vehicle body.

8. Vehicle roof structure (10) according to one of the preceding claims,
**characterized in that**,
the linkage mechanism (30, 36) includes a connecting rod connected with the convertible top compartment lid, which connecting rod is connected with the guide device (40, 42, 44) such that the guide device effects a corresponding pivoting movement of the roof part (12) during a closing movement of the convertible top compartment lid (16).

9. Vehicle roof structure (10) according to one of the preceding claims,
**characterized in that**,
the roof part (12) is divided into a plurality of contiguous areas (22, 24) such that, by displacement of areas, it is variable between a reduced width and a normal width and it is movable in the reduced width between its opened- and closed position.

10. Vehicle having a vehicle roof structure (10) according to one of the preceding claims.

## Revendications

1. Structure de toit de véhicule (10) comportant au moins un couvercle de caisson arrière (16) et une partie de toit (12), rigide, mobile entre une position d'ouverture et une position de fermeture, et qui, en position de fermeture, s'étend entre l'encadrement (14) du pare-brise du véhicule et le couvercle du caisson de toit ouvrant (16) et
en position d'ouverture, cette partie de toit est logée dans un volume situé sous le couvercle de caisson de toit (16),
la partie de toit (12) étant mobile entre la position de fermeture et la position d'ouverture à l'aide d'un mécanisme à tringlerie (30, 36) et en plus il est prévu au moins une installation de guidage (40, 42, 44),
**caractérisée en ce que**
la partie de toit (12) est en contact avec l'installation de guidage (40, 42, 44) sur une partie de sa trajectoire, entre la position ouverte et la position fermée,
l'installation de guidage (40, 42, 44) ayant au moins un élément de guidage monté sur le couvercle de caisson de toit (16) ou la carrosserie du véhicule et qui arrive en prise avec un chemin de guidage (44) prévu sur la partie de toit, lors du mouvement de la partie de toit, de sa position de fermeture à sa position d'ouverture, en se déplaçant le long de ce chemin,
un changement de direction du trajet de la partie de toit (12) se produit lorsque l'installation de guidage arrive en contact avec la partie de toit.

2. Structure de toit de véhicule (10) selon la revendication 1,
**caractérisée en ce que**
l'installation de guidage comprend au moins un galet (40, 42).

3. Structure de toit de véhicule (10) selon la revendication 1 ou 2,
**caractérisée en ce que**
l'installation de guidage comprend un premier et un second élément de guidage, de préférence deux galets (40, 42) écartés l'un par rapport à l'autre sur le couvercle de caisson de toit, de façon à produire respectivement un changement de direction de la trajectoire de la partie de toit (12) lors de son mouvement, partant de la position de fermeture vers la position d'ouverture.

4. Structure de toit de véhicule (10) selon la revendication 3,
**caractérisée en ce que**
la trajectoire de la partie de toit (12), entre la position de fermeture et la position d'ouverture, se décompose en un premier segment dans lequel l'installation de guidage n'a pas de contact avec la partie de toit, un second segment au cours duquel le premier élément de guidage (40) est en contact avec le chemin de guidage (44) de la partie de toit (12) et un troisième segment dans lequel le second élément de guidage (42) est en contact avec le chemin de guidage (44) de la partie de toit (12) et le premier élément de guidage (40) n'est pas en contact avec le chemin de guidage (44) de la partie de toit.

5. Structure de toit de véhicule (10) selon la revendication 3 ou 4,
**caractérisée en ce que**
le chemin de guidage (44) est formé par la surface supérieure d'une barrette de décoration prévue sur la carrosserie.

6. Structure de toit de véhicule (10) selon l'une des revendications précédentes,
**caractérisée en ce que**
le mécanisme de tringlerie (30) comprend un dispositif de bras monté à rotation côté carrosserie du véhicule, ayant deux bras (31, 34) tournant l'un par rapport à l'autre et un dispositif de précontrainte (35),
les axes de rotation des bras étant parallèles et l'axe de rotation du dispositif de bras étant pratiquement parallèle par rapport à la carrosserie du véhicule et les bras (31, 34) sont alignés l'un à l'autre dans une première position angulaire (α1) prédéfinie par l'installation de précontrainte (35) et ils sont déplacés dans la seconde position angulaire (α2, α3, α4) contre la précontrainte, de l'installation de précontrainte par le contact de l'installation de guidage (40, 42, 44) avec la partie de toit.

7. Structure de toit de véhicule (10) selon la revendication 6,
**caractérisée en ce que**
le dispositif de bras (31, 34) est monté coulissant en translation, en plus, par rapport à la carrosserie du véhicule.

8. Structure de toit de véhicule (10) selon l'une des revendications précédentes,
**caractérisée en ce que**
le mécanisme de tringlerie (30, 36) comporte un bras relié au couvercle de caisson de toit, ce bras étant relié à l'installation de guidage (40, 42, 44) de façon que lors d'un mouvement de fermeture du couvercle de caisson de toit (16), l'installation de guidage produit un mouvement de pivotement correspondant de la partie de toit (12).

9. Structure de toit de véhicule (10) selon l'une des revendications précédentes,
**caractérisée en ce que**
la partie de toit (12) est divisée en plusieurs zones reliées (22, 24) de façon à être mobile par déplacement de zones, entre une largeur rétrécie et une largeur normale, et en largeur réduite, elle peut varier entre sa position d'ouverture et sa position de fermeture.

10. Véhicule automobile équipé d'une structure de toit de véhicule (10) selon l'une des revendications précédentes.
